# EUROPÄISCHE PATENTSCHRIFT

(11) **EP 2 179 949 B1**
(45) Veröffentlichungstag und Bekanntmachung des Hinweises auf die Patenterteilung: **22.10.2014**
(21) Anmeldenummer: 09012188.0
(22) Anmeldetag: 25.09.2009
(51) Int. Cl.: B65G 69/18

(54) **Kupplungsveschluss sowie Befestigungsmodul und Andockeinrichtung, jeweils enthaltend diesen Kupplungsverschluss**
Coupling seal as well as fastener module and docking device each comprising said coupling closure
Fermeture à accouplement ainsi que module de fixation et dispositif d'accrochage, chacun comportant ladite fermeture à accouplement

(30) Priorität: 26.09.2008 DE 102008049129
(43) Veröffentlichungstag der Anmeldung: 28.04.2010
(73) Patentinhaber: GEA Pharma Systems AG, 4416 Bubendorf (CH)
(72) Erfinder: Marsden Smith, Thomas, Brookhaven, PA 19015 (US); Lais, Peter, 79379 Müllheim (DE); Koch, Martin, 79395 Neuenburg (DE)
(74) Vertreter: Metten, Karl-Heinz

(56) Entgegenhaltungen:
- EP-A1- 0 928 921
- EP-A1- 1 043 252
- EP-A2- 1 749 770
- WO-A2-2008/071181
- DE-U1-202007 013 675

## Beschreibung

Die vorliegende Erfindung betrifft einen Kupplungsverschluss zum, insbesondere umweltisolierten, Umfüllen, Befüllen und/oder Entleeren von Behältnissen sowie ein Befestigungsmodul und eine Andockeinrichtung, jeweils enthaltend diesen erfindungsgemäßen Kupplungsverschluss.

Kupplungsverschlüsse zum kontaminationsfreien Umfüllen, Befüllen oder Entleeren von Behältnissen kommen in der weiterverarbeitenden Industrie vielfältig zum Einsatz. Solche Kupplungsverschlüsse sind auch als Halbklappen bzw. Butterflyklappen bekannt. Unter Verwendung zweier solcher komplementärer Kupplungs- bzw. Halbklappenverschlüsse erhält man bei gegenseitiger Anlage eine Andockeinrichtung, mit deren Hilfe sich auch toxisches Schüttgut in der Regel umweltisoliert transferieren lässt. Derartige Kupplungsverschlüsse und Andockeinrichtungen finden sich z.B. in der EP 1 983 137 B1, EP 1 313 658 B1 und EP 1 215 662 B1 offenbart.

Aus EP 1 749 770 A2 ist eine Vorrichtung zum Kuppeln von Behältnissen mit jeweils einer Öffnung, umfassend einen mit der Öffnung des einen Behältnisses dichtverbindbaren Kupplungsstutzens und einen mit der Öffnung des anderen Behältnis verbindbaren zweiten Kupplungsstutzens bekannt. Die Vorrichtung umfasst eine kippbar am ersten Kupplungsstutzen angeordnete erste Schließklappe, die in einer geschlossenen Kippstellung den ersten Kupplungsstutzen dicht abschließt und eine kippbar am zweiten Kupplungsstutzen angeordnete zweite Schließklappe, die in einer geschlossenen Kippstellung den zweiten Kupplungsstutzen dicht abschließt. Die beiden Schließklappen umfassen jeweils einen Teller und jeweils einen Radial am Teller angeordneten Axtzapfen zum kippbaren Lagern der Schließklappe.

Aus WO 2008/071181 A2 ist ein Kupplungsverschluss für eine Andockeinrichtung mit einer Verschlussseite und eine Behälterseite, umfassend einen Rohstutzen und eine darin verschwenkbare um eine Achse gelagerte Schließklappe, enthaltend eine der Verschlussseite in der Schließstellung zugewandte Außenseite bekannt, wobei die Schließklappe an mindestens einer Seite längs der Achse mit einer Partialwelle in jeweils zur Verschlussseite offenen Lager gelagert ist, wobei die Partialwelle geeignet ist, um bei Anlage mit einer komplementären Partialwellen eines weiteren Kupplungsverschlusses eine Partialwelle auszubilden. Der Kupplungsverschluss bzw. die Andockeinrichtung der WO 2008/071181 A2 entspricht dem Oberbegriff des Anspruchs 1 bzw. des Anspruchs 18.

Die Bemühungen, einen sehr hohen Grad an Kontaminationsfreiheit zu erhalten, haben sich, wie u. a. der EP 1 313 658 B1 entnommen werden kann, beispielsweise darauf erstreckt, zwischen den Stirnseiten einander zugewandter Kupplungsverschlüsse einer Andockeinrichtung temporär einen Reinigungsraum auszubilden, der mit einem Reinigungsfluid durchspült werden kann. Eine derartige Vorgehensweise führt jedoch nicht zwangsläufig dazu, dass auf das vollständige Auseinanderbauen der Andockeinrichtung zwecks gründlicherer Reinigung und Dekontamination sämtlicher Funktionselemente verzichtet werden kann. Auch geht kein geringer konstruktiver Aufwand damit einher, einen solchen temporären Reinigungsraum vorsehen zu können.

Um fortwährend ein Höchstmaß an Kontaminationsfreiheit zu gewährleisten, ist man insbesondere in der pharmazeutischen Industrie dazu übergegangen, die verwendeten Kupplungsverschlüsse und Andockeinrichtungen nach deren Einsatz komplett zu zerlegen und sämtliche Einzelteile zu säubern. Zur Minimierung der Gefährdung der Umwelt sind für den Fall, das toxische oder gesundheitsgefährdende Substanzen mit der Andockeinrichtung transportiert wurden, besondere Sicherheitsvorkehrungen zu treffen. Dieses Prozedere ist noch stets sehr zeit-, arbeits- und kostenaufwendig. Es wäre wünschenswert, auf solche Kupplungsverschlüsse und Andockeinrichtungen zurückgreifen zu können, die nicht mit den Nachteilen des Stands der Technik behaftet sind und eine verbesserte Reinigung erlauben.

Der vorliegenden Erfindung lag daher die Aufgabe zugrunde, Kupplungsverschlüsse und Andockeinrichtungen für den Transfer insbesondere toxischer Schüttgüter verfügbar zu machen, die sich schnell, ohne großen Aufwand sowie zuverlässig und mit einem Höchstmaß an Sicherheit reinigen lassen.

Die der Erfindung zugrunde liegenden Aufgabe wird gemäß einem ersten Aspekt gelöst durch einen Kupplungsverschluss für eine Andockeinrichtung zum, insbesondere umweltisolierten Umfüllen, Befüllen oder Entleeren von Behältnissen oder Fördermitteln ausgestattet mit einer Verschlussseite und einer Behälterseite, umfassend einen Rohrstutzen und eine darin verschwenkbar um eine Achse gelagerte Schließklappe, enthaltend eine der Verschlussseite in der Schließstellung zugewandte Stirnseite, wobei die Schließklappe an mindestens einer Seite, insbesondere auf beiden Seiten, längs der Achse mit einer Partialwelle oder einem Partialwellenstummel in jeweils zur Verschlussseite hin offenem Lager, insbesondere umfassend eine Lagerschale, gelagert ist, wobei die Partialwelle(n) oder -wellenstummel geeignet ist (sind), um bei Anlage mit komplementären Partialwellen bzw.- wellenstummeln eines weiteren, komplementären Kupplungsverschlusses eine Welle oder einen Wellenstummel auszubilden, wobei mindestens eine Partialwelle oder mindestens ein Partialwellenstummel in der Stirnfläche, vorzugsweise beide Partialwellen bzw.- wellenstummel, mindestens eine teilkreisförmige, insbesondere halbkreisförmige Führungsnut aufweist, deren einander gegenüberliegende Enden sich jeweils bis zur Auflagefläche für eine komplementäre Partialwelle bzw. einen komplementären Partialwellenstummel eines weiteren Kupplungsverschlusses erstrecken, und das zur Verschlussseite hin offene Lager mindestens eine in das Innere des Rohrstutzens weisende teilkreisförmige, insbesondere halbkreisförmige, Führungsschiene aufweist, welche im wesentlichen komplementär ist zu der Führungsnut in der Stirnfläche der Partialwelle oder des Partialwellenstummels, wobei die Führungsnut und die dazu komplementäre Führungsschiene geeignet und ausgelegt sind, um beim Verschwenken der Schließklappe von der Schließstellung in die Offenstellung formschlüssig ineinander zu greifen, und/oder das zur Verschlussseite hin offene Lager mindestens eine in das Innere des Rohrstutzens weisende teilkreisförmige, insbesondere halbkreisförmige, Führungsnut aufweist, deren einander gegenüberliegende Enden sich jeweils bis zur Auflagefläche für eine komplementäre Partialwelle bzw. einen komplementären Partialwellenstummel eines weiteren Kupplungsverschlusses erstrecken, und dass mindestens eine Partialwelle oder mindestens ein Partialwellenstummel in der Stirnfläche, vorzugsweise beide Partialwellen bzw.- wellenstummel, mindestens eine teilkreisförmige, insbesondere halbkreisförmige Führungsschiene aufweist, welche im wesentlichen komplementär ist zu der Führungsnut in dem Lager, wobei die Führungsnut und die dazu komplementäre Führungsschiene geeignet und ausgelegt sind, um beim Verschwenken der Schließklappe von der Schließstellung in die Offenstellung formschlüssig ineinander zu greifen.

Erfindungsgemäß weisen die Führungsnut und die Führungsschiene zueinander komplementäre formschlüssige Ineingriffnahmeelemente auf, die eine relative Axialbewegung von Partialwelle bzw. -wellenstummel und Lager unterbinden.

Dieser erfindungsgemäße Kupplungsverschluss stellt z.B. eine Weiterentwicklung der in der WO 2008/071181 A2, EP 1 983 137 B1, EP 1 313 658 B1 und EP 1 215 662 B1 sowie in der EP 1 947 039 A1 offenbarten Kupplungsverschlüsse dar.

Erfindungsgemäß ist die Partialwelle oder der Partialwellenstummel mit mindestens einem Eingriffselement ausgestattet, in das ein komplementäres Eingriffselement, das in Wirkverbindung mit einem Antrieb bringbar ist oder steht, einführbar ist. Somit stellt der erfindungsgemäße Kupplungsverschluss auch eine Weiterentwicklung der in der WO 2008/071181 A2 und EP 1 947 039 A1 offenbarten Kupplungsverschlüsse dar. Hierbei kann des weiteren vorgesehen sein, dass das Eingriffelement auf der Stirnfläche der Partialwelle oder des Partialwellenstummels vorliegt, so dass dieses axial in ein komplementäres Eingriffselement, das in Wirkverbindung mit einem Antrieb bringbar ist oder steht, einführbar ist. Bei dieser Ausgestaltung stellt das komplementäre Eigengriffselement vorzugsweise mindestens eine Nut und/oder mindestens einen Vorsprung, insbesondere einen Dorn dar.

Im Sinne der vorliegenden Erfindung umfasst das zur Verschlussseite hin offene Lager die Lagerschale, in der die Partialwelle bzw. der Partialwellenstummel drehbar gelagert aufliegt. Das Lager und damit auch die Lagerschale können Bestandteil einer so genannten Lagerschaleneinheit sein. Diese Lagerschaleneinheit kann ein separates bzw. von dem Rohrstutzen separierbares Bauteil sein. Vorzugsweise ist hierbei mindestens eine bzw. sind insbesondere beide Lagerschaleneinheiten reversibel trennbar mit den Rohrstutzen verbunden oder verbindbar.

Durch die formschlüssige Lagerung bzw. Verbindung von mindestens einem Lager mit mindestens einer Partialwelle, vorzugsweise von beiden Lagern mit den korrespondierenden Partialwellen oder -wellenstummeln erhält man einen zweiten erfindungsgemäßen Kupplungsverschluss, bei dem die Schließklappe auch im Dauerbetrieb unverlierbar mit dem Rohrstutzen bzw. den Kupplungsverschluss verbunden bleibt. Überraschenderweise wird diese Zunahme an Betriebsicherheit ohne zusätzliche weitere Bauteile erreicht. Ganz im Gegenteil stellt sich dieser erfindungsgemäße Kupplungsverschluss als ein solcher dar, der mit einer sehr geringen Anzahl an Einzelkomponenten gleichwohl einen kontaminationsfreien Transfer von Schüttgut gewährleistet.

Ferner ist es möglich, auf den Rohrstutzen des erfindungsgemäßen Kupplungsverschlusses innenseitig zumindest bereichsweise, insbesondere vollumfänglich, mit einer Rohrstutzendichtung auszustatten. Ferner kann vorgesehen sein, dass in Schließstellung die Stirnseite der Schließklappe und die nicht in dem Lager gelagerte, insbesondere abgeflachte, Seite der Partialwelle bzw. Partialwellenstummels zumindest bereichsweise fluchtend angeordnet oder angeordnet sind.

Das Lager, die Lagerschale bzw. die Lagerschaleneinheit, insbesondere jedoch zumindest die Lagerschale sind auch bei dem erfindungsgemäßen Kupplungsverschluss, mindestens bereichsweise, insbesondere vollständig, aus mindestens einem Kunststoffmaterial, insbesondere aus Polyamid, Polyetherketon (PEK), Polyetheretherketon (PEEK), Polyetherimid, Polybutylenterephthalat (PBT), Polyketonen, Polyimiden, Polyphenylenether, Polyaryletherketonen, Polyacrylnitril, Polyvinylchlorid, Polyolefinen und/oder Polyoxymethylen, gefertigt sind.

Vorzugsweise verfügt der Rohrstutzen über ein erstes, verschlussseitiges und ein gegenüberliegendes zweites, behälterseitiges Ende sowie eine Innen- und eine Außenseite, wobei die Schließklappe an dem ersten Ende vorliegt, und wobei ferner auf der Außenseite des Rohrstutzens ein, insbesondere umlaufendes, erstes Klemmelement vorliegt, geeignet und ausgelegt für die kombinierte Ineingriffnahme mit einem zweiten Klemmelement vermittels einer Verschlussklammer zwecks temporärer Verbindung

Geeignete Kupplungsverschlüsse, mit denen Andockeinrichtungen für den umweltisolierten Transfer von Schüttgut zugänglich sind, finden sich z.B. in der WO 2008/071181 A2, EP 1 983 137 B1, EP 1 313 658 B1 und EP 1 215 662 B1 offenbart.

Unter einer Verschlussseite im Sinne der vorliegenden Erfindung wird diejenige Seite des Kupplungsverschlusses bzw. Rohrstutzens verstanden, welche einem weiteren, komplementären Kupplungsverschluss bei Ausbildung einer Andockeinrichtung aus diesen Kupplungsverschlüssen zugewandt ist. Demgemäß stellt im Sinne der vorliegenden Erfindung die Behälterseite diejenige Seite des Kupplungsverschlusses bzw. Rohrstutzens dar, welche einem zu befüllenden oder zu entleerenden Behälter oder Fördermittel zugewandt bzw. mit einem Behälter oder Fördermittel verbunden ist.

Das erste Klemmelement liegt vorzugsweise auf der Außenseite an dem zweiten Ende des Rohrstutzens, d.h. an dem behälterseitigen Ende desselben vor. Das erste Klemmelement stellt vorzugsweise einen von der Außenseite des Rohrstutzens vorspringenden Klemmrand dar, beispielsweise eine, vorzugsweise umlaufende, Feder. Beispielsweise kann das erste Klemmelement unmittelbar am Rand des Rohrstutzens vorliegen. Alternativ ist es ebenfalls möglich, dass das erste Klemmelement auf der Außenseite des Rohrstutzens beabstandet von dem Rand des Rohrstutzens, insbesondere umlaufend, vorliegt. Der Abstand des ersten Klemmelements von dem Rand des Rohrstutzens an dem zweiten Ende desselben ist zweckmäßigerweise in Abhängigkeit von den Dimensionen der Verschlussklammer zu wählen, um über eine In-eingriffnahme des ersten Klemmelements und eines weiteren, zweiten Klemmelements eine feste Verbindung herstellen zu können.

Des Weiteren kann vorgesehen sein, dass die Schließklappe in Verbindung mit mindestens einer Welle, beispielsweise einer Antriebswelle, steht.

In einer besonders bevorzugten Ausgestaltung zeichnet sich der erfindungsgemäße Kupplungsverschluss dadurch aus, dass die Rohrstutzendichtung sich zumindest abschnittsweise über das zweite Ende des Rohrstutzens hinaus erstreckt.

Hierbei kann z.B. auch vorgesehen sein, dass die Schließklappe auf ihrer Außenseite mit mindestens einem Dichtungsabschnitt oder mindestens einer, insbesondere umlaufenden, Dichtung versehen ist, die zumindest abschnittsweise am oder benachbart zum Umfangsrand angeordnet ist. In einer weiteren zweckmäßigen Ausgestaltung ist vorgesehen, dass die Schließklappe auf ihrer Außenseite mit mindestens einem Dichtungsabschnitt oder mindestens einer, insbesondere umlaufenden, Dichtung versehen ist, die zumindest abschnittsweise am oder benachbart zum Umfangsrand angeordnet ist. Des Weiteren ist es möglich, die Schließklappe in der Rohrstutzendichtung zu lagern.

Erfindungsgemäße Kupplungsverschlüsse beinhalten auch solche Ausführungsformen, bei denen diese Kupplungsverschlüsse bzw. deren Rohrstutzen behälterseitig dichtend verbindbar oder verbunden mit einem Behälter oder einem Fördermittel vorliegen.
Im Sinne der vorliegenden Erfindung umfasst das zur Verschlussseite hin offene Lager die Lagerschale, in der die Partialwelle bzw. der Partialwellenstummel drehbar gelagert aufliegt. Das Lager und damit auch die Lagerschale können Bestandteil einer so genannten Lagerschaleneinheit sein. Diese Lagerschaleneinheit kann ein separates bzw. von dem Rohrstutzen separierbares Bauteil sein.

Gemäß einem weiteren Aspekt umfasst die vorliegende Erfindung eine Andockeinrichtung zum, insbesondere umweltisolierten, Umfüllen, Befüllen, und/oder Entleeren von Behältnissen oder Fördermitteln (zweite erfindungsgemäße Andockeinrichtung), umfassend über ihre jeweiligen Verschlussseiten aneinander bündig anlegbare oder anliegende erste und zweite komplementäre Kupplungsverschlüsse, wobei die Stirnseiten der jeweiligen Schließklappen aneinander anliegen oder aneinander zur Anlage bringbar sind und in aneinander angelegtem Zustand aus einer Schließstellung, in der sie den durch den Rohrstutzen des ersten Kupplungsverschlusses und den Rohrstutzens des zweiten Kupplungsverschlusses gebildeten Transferkanal verschließen, um eine gemeinsame Achse in eine Öffnungsstellung schwenkbar sind, wobei mindestens ein Kupplungsverschluss, insbesondere beide Kupplungsverschlüsse solche gemäß dem vorangehend geschilderten erfindungsgemäßen Kupplungsverschluss darstellen.

Dabei kann vorgesehen sein, dass die Rohrstutzen, insbesondere die Rohrstutzendichtungen, von erstem und zweitem Kupplungsverschluss bei Anlage derselben gegeneinander bündig abschließen.

Zweckmäßigerweise sind hierbei regelmäßig die Schließklappen von erstem und zweitem Kupplungsverschluss im Wesentlichen kreisförmig ausgebildet.

Gemäß einem weiteren Aspekt der vorliegenden Erfindung wird das zugrunde liegende Problem gelöst durch ein Befestigungsmodul, umfassend einen erfindungsgemäßen Kupplungsverschluss sowie eine Verschlussklammer, geeignet und ausgelegt zur kombinierten Ineingriffnahme des ersten Klemmelements mit einem zweiten, komplementären Klemmelement zwecks temporären Verbindung.

In einer bevorzugten Ausgestaltung verfügt das erfindungsgemäße Befestigungsmodul ferner über einen Klemmstutzen, insbesondere Flansch, mit einem ersten Ende und einem gegenüberliegenden zweiten Ende und einer Innen- und einer Außenseite, wobei auf der Außenseite, insbesondere am zweiten Ende, das, insbesondere umlaufende, zweite Klemmelement vorliegt. Das zweite Ende des Klemmstutzens ist demgemäß bei Einsatz der Verschlussklammer benachbart zur Behälterseite bzw. dieser zugewandt.

Als besonders zweckmäßig und bedienfreundlich haben sich solche erfindungsgemäßen Befestigungsmodule erwiesen, bei denen der Rohrstutzen des Kupplungsverschlusses über eine Rohrstutzendichtung verfügt, die sich zumindest abschnittsweise, insbesondere vollumfänglich, über das zweite, behälterseitige Ende des Rohrstutzens hinaus erstreckt.

In einer ersten Weiterentwicklung umfasst das erfindungsgemäße Befestigungsmodul ferner einen Behälter mit einer Umfüll-, Befüll- oder Entleeröffnung oder ein Fördermittel mit einer Umfüll-, Befüll- oder Entleeröffnung, insbesondere einen Schlauch oder ein Rohr, jeweils mit einer Außen- und einer Innenseite, wobei auf der Außenseite des Behälters oder des Fördermittels das, insbesondere umlaufende, zweite, komplementäre Klemmelement, insbesondere als integraler Bestandteil des Behälters oder Fördermittels, vorliegt.

Gemäß einer zweiten Weiterentwicklung umfasst das erfindungsgemäße Befestigungsmodul ferner einen Behälter mit einer Umfüll-, Befüll- oder Entleeröffnung oder ein Fördermittel mit einer Umfüll-, Befüll- oder Entleeröffnung, insbesondere einen Schlauch oder ein Rohr, sowie einen Klemmstutzen, insbesondere Flansch, welcher mit dem Behälter oder Fördermittel verbunden oder integraler Bestandteil derselben ist, und der über ein erstes, dem Behälter oder Fördermittel zugewandtes Ende und ein gegenüberliegendes zweites, dem Kupplungsverschluss zugewandtes oder zuwendbares Ende sowie über eine Innen- und eine Außenseite verfügt, wobei auf der Außenseite, insbesondere am zweiten Ende, das, insbesondere umlaufende, zweite Klemmelement, insbesondere als integraler Bestandteil des Klemmstutzens, vorliegt.

Als besonders zweckmäßig hat sich eine solche Ausführungsform eines erfindungsgemäßen Befestigungsmoduls erwiesen, bei der die Umfüll-, Befüll- oder Entleeröffnung des Behälters oder des Fördermittels in ihrer Dimensionierung im Wesentlichen komplementär zu dem sich über den Rohrstutzen hinaus erstreckenden Ende der Rohrstutzendichtung ist und wobei das sich über den Rohrstutzen hinaus erstreckenden Ende der Rohrstutzendichtung und die Umfüll-, Befüll- oder Entleeröffnung geeignet und ausgelegt sind, um bei Ineingriffnahme von erstem und zweitem Klemmelement durch die Verschlussklammer in dichtendem Kontakt zu treten.

In gleicher Weise stellt sich eine solche Ausführungsform als besonders zweckmäßig dar, bei der das zweite Ende des Klemmstutzens in seiner Dimensionierung im Wesentlichen komplementär zu dem sich über den Rohrstutzen hinaus erstreckenden Ende der Rohrstutzendichtung ist und wobei das sich über den Rohrstutzen hinaus erstreckenden Ende der Rohrstutzendichtung und das zweite Ende des Klemmstutzens geeignet und ausgelegt sind, um bei Ineingriffnahme von erstem und zweitem Klemmelement durch die Verschlussklammer in dichtendem Kontakt zu treten.

Die beiden vorangehend genannten besonders zweckmäßigen Ausgestaltungen haben u.a. den Vorteil, die Anzahl der Bauteilkomponenten der erfindungsgemäßen Befestigungsmodule sehr gering halten zu können. Interessanterweise wird durch diese Minimierung der Bauteile die Umweltdichtigkeit beim Transfer von Schüttgut nicht beeinträchtigt. Vielmehr wird ein noch höheres Maß an Bediensicherheit erhalten. Beispielsweise wird die Gefahr verringert, Bauteile mit Schüttgut zu kontaminieren, was bislang regelmäßig die Demontage und Reinigung aufwendiger gestaltet hat.

Des weiteren sind auch solche erfindungsgemäßen Befestigungsmodule gemäß den vorangehend genannten ersten und zweiten Weiterentwicklungen umfasst, bei denen der Behälter oder das Fördermittel an der Umfüll-, Befüll- oder Entleeröffnung eine zumindest abschnittsweise, insbesondere umlaufende, Dichtung aufweist, die komplementär ist zu dem sich über den Rohrstutzen hinaus erstreckenden Ende der Rohrstutzendichtung und die geeignet und ausgelegt ist, um bei Ineingriffnahme von erstem und zweitem Klemmelement durch die Verschlussklammer mit der Rohrstutzendichtung in dichtendem Kontakt zu treten.

Darüber hinaus sind auch solche erfindungsgemäßen Befestigungsmodule mit umfasst, bei denen der Klemmstutzen an dem zweiten Ende eine zumindest abschnittsweise, insbesondere umlaufende, Dichtung aufweist, die komplementär zu dem sich über den Rohrstutzen hinaus erstreckenden Ende der Rohrstutzendichtung ist und die geeignet und ausgelegt ist, um bei Ineingriffnahme von erstem und zweitem Klemmelement durch die Verschlussklammer mit der Rohrstutzendichtung in dichtenden Kontakt zu treten.

Indem bei den vorangehend geschilderten Ausführungsformen einerseits die Rohrstutzendichtung über das zweite Ende des Rohrstutzens hervorsteht und andererseits ebenfalls die Öffnung des Behälters, Fördermittels oder Klemmstutzens bzw. die Dichtung an der Öffnung des Behälters oder Fördermittels derart ausgestaltet sind, dass diese mit der überstehenden Dichtung in Kontakt bringbar sind, kann allein über die Verschlussklammer beim Verschließen derselben durch Ineingriffnahme der, insbesondere umlaufenden, ersten und zweiten Klemmelemente, beispielsweise in Form von so genannten Federn bzw. Vorsprüngen, ein Aneinanderpressen der genannten Öffnung mit der überstehenden Dichtung bzw. der beiden genannten Dichtungen bewirkt werden. Hierbei ist von Vorteil, dass auf einen zusätzlichen Dichtungsring, beispielsweise ein O-Ring, zwischen dem ersten und zweiten Klemmelement vollständig verzichtet werden kann.

Zur Erhöhung der Dichtigkeit zwischen dem ersten und zweiten Klemmelement kann gleichwohl ferner mindestens ein Dichtungsring vorgesehen sein, der geeignet und ausgelegt ist zur dichtenden Anlage zwischen den erstem und den zweiten Klemmelement.

In einer weiteren Ausführungsform kann vorgesehen sein, dass das erste Klemmelement einen Nutklemmstutzen und das zweite Klemmelement einen Bundklemmstutzen darstellt oder umfasst oder Bestandteil hiervon ist. Alternativ kann vorgesehen sein, dass das erste Klemmelement einen Bundklemmstutzen und das zweite Klemmelement einen Nutklemmstutzen darstellt oder umfasst oder Bestandteil hiervon ist.

Die bei dem erfindungsgemäßen Befestigungsmodul zum Einsatz kommende Verschlussklammer stellt vorzugsweise eine Spannklammer, insbesondere nach DIN 32676, oder einen Schnellverschluss dar. Besonders bevorzugt werden als Verschlussklammern so genannte Tri-Clamp-Verschlüsse verwendet. Hierbei kann beispielsweise auf so genannte Eingelenk- und Zweigelenk-Tri-Clamp-Verschlüsse zurückgegriffen werden. Diese Ein- und Zweigelenksysteme verfügen jeweils über zwei Halbschalen bzw. Bügelelemente. Des Weiteren können auch dreiteilige Tri-Clamp-Gelenkklammersysteme zum Einsatz kommen. Gelenk und Verschluss bzw. Schnellverschluss liegen bei den Eingelenk- und Zweigelenksystemen regelmäßig einander gegenüber. Im Querschnitt betrachtet verfügen die Halb- bzw. Teilschalen, die die Verschlussklammer bzw. die Tri-Clamp-Verbindung bilden über eine V-förmige Nut. In einer Ausführungsform wird der Verschluss bzw. Schnellverschluss durch eine Verschlussschraube und eine Gewindemutter gebildet. Die Verschlussschraube ist vorzugsweise schwenkbar an einem Achsbolzen der einen Halbschale gelagert.

Bei der Montage der Verschlussklammer bzw. des Tri-Clamp-Verschlusses ergreifen die ersten und zweiten Klemmelemente, beispielsweise in Form hervorstehender Außenränder in die V-förmige Nut der Halb- bzw. Teilschalen der Verschlussklammer ein. Anschließend kann die Verschlussschraube in die Verschlussposition geschwenkt werden. Durch Festdrehen der Gewindemutter können die ersten und zweiten Klemmelemente koaxial fest gegeneinander gedrückt werden, so dass eine dichte Verbindung entsteht.

In einer besonders vorteilhaften Ausführungsform eines erfindungsgemäßen Befestigungsmoduls ist vorgesehen, dass der Klemmstutzen, insbesondere der zweite Flansch, einen, insbesondere integralen, Bestandteil eines Behälters, Containers oder Fördermittels, insbesondere Schlauches, darstellt.

Die der Erfindung zugrunde liegende Aufgabe wird gemäß einem weiteren Aspekt gelöst durch eine Andockeinrichtung zum, insbesondere umweltisolierten, Umfüllen, Befüllen und/oder Entleeren von Behältnissen (erste erfindungsgemäße Andockeinrichtung), umfassend einen erfindungsgemäßen ersten Kupplungsverschluss oder ein erfindungsgemäßen Befestigungsmodul sowie einen weiteren, zum ersten Kupplungsverschluss komplementären zweiten Kupplungsverschluss mit einer Verschlussseite und einer Behälterseite, umfassend einen zweiten Rohrstutzen und eine darin verschwenkbare um eine Achse gelagerte Schließklappe, enthaltend eine der Verschlussseite in der Schließstellung zugewandte Stirnseite, wobei die Stirnseiten der Schließklappen von erstem und zweitem Kupplungsverschluss aneinander anliegen oder aneinander zur Anlage bringbar sind und in aneinander angelegtem Zustand aus einer Schließstellung, in der sie den durch den Rohrstutzen des ersten Kupplungsverschlusses und den Rohrstutzen des zweiten Kupplungsverschlusses gebildeten Transferkanal verschließen, um eine gemeinsame Achse in eine Öffnungsstellung verschwenkbar sind. Hierbei beinhaltet das erfindungsgemäße Befestigungsmodul auch den erfindungsgemäßen ersten Kupplungsverschluss.

Geeignete Andockeinrichtungen finden sich z.B. in der WO 2008/071181 A2, EP 1 983 137 B1, EP 1 313 658 B1 und EP 1 215 662 B1 offenbart.

Hierbei kann in einer zweckmäßigen Ausgestaltung der erfindungsgemäßen Andockeinrichtung vorgesehen sein, dass die Rohrstutzen, insbesondere die Rohrstutzendichtungen, von erstem und zweitem Kupplungsverschluss bei Anlage derselben gegeneinander bündig abschließen.

Vorteilhafterweise sind bei der erfindungsgemäßen Andockeinrichtung die Schließklappen von ersten und zweiten Kupplungsverschluss im Wesentlichen kreisförmig ausgebildet.

Ferner kann die erfindungsgemäße Andockeinrichtung mit mindestens einer Antriebswelle die in Wirkverbindung mit einem Antrieb steht, ausgestattet sein.

Der vorliegenden Erfindung liegt die überraschende Erkenntnis zugrunde, dass sich bei Verwendung der erfindungsgemäßen Kupplungsverschlüsse, Befestigungsmodule und Andockeinrichtungen das Reinigungsprozedere nach einem Schüttguttransfer erheblich vereinfachen lässt. Beispielsweise kann die für die Demontage und Montage aufzuwendende Zeit gegenüber herkömmlichen Schüttguttransfersystemen um ein Vielfaches reduziert werden. Außerdem gestatten der erfindungsgemäße Kupplungsverschluss, das erfindungsgemäße Befestigungsmodul und die erfindungsgemäße Andockeinrichtung, das Kontaminationsrisiko nochmals zu verringern und gleichzeitig die Bediensicherheit erheblich zu erhöhen. So kommt man gegenüber herkömmlichen Systemen mit weitaus weniger Bauteilen aus. Diesbezüglich stellt sich ein Vorteil insbesondere gegenüber solchen Schüttguttransfersystemen ein, bei denen ein Kupplungsverschluss bzw. eine Halbklappe fest, beispielsweise über eine Vielzahl an Schrauben, mit einem zu entleerenden oder zu befüllenden Behältnis zu verbunden sein hatte.

Weitere Vorteile, Merkmale und Anwendungsmöglichkeiten der vorliegenden Erfindung ergeben sich aus der folgenden Beschreibung eines bevorzugten Ausführungsbeispiels in Verbindung mit den anliegenden Zeichnungen. In diesen Zeichnungen zeigen
- Figur 1: eine perspektivische Draufsicht auf eine Ausführungsform einer erfindungsgemäßen Befestigungsmoduls,
- Figur 2: eine Querschnittsansicht des erfindungsgemäßen Befestigungsmoduls gemäß Figur 1,
- Figur 3: eine Draufsicht auf die Verschlussseite des Befestigungsmoduls gemäß Figur 1,
- Figur 4: eine schematische Explosionsdarstellung einer Ausführungsform eines erfindungsgemäßen Befestigungsmoduls,
- Figur 5: eine schematische Wiedergabe einer Ausführungsform eines erfindungsgemäßen Kupplungsverschlusses in perspektivischer Draufsicht und
- Figur 6: einen Ausschnitt, umfassend die Lagerschaleneinheit des Kupplungsverschlusses gemäß Figur 5.

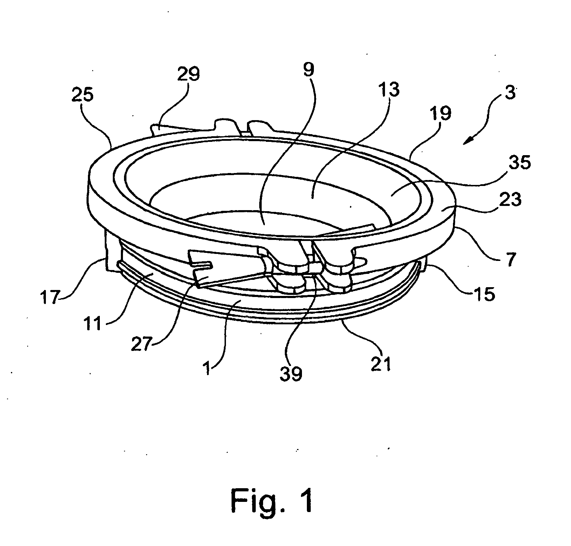

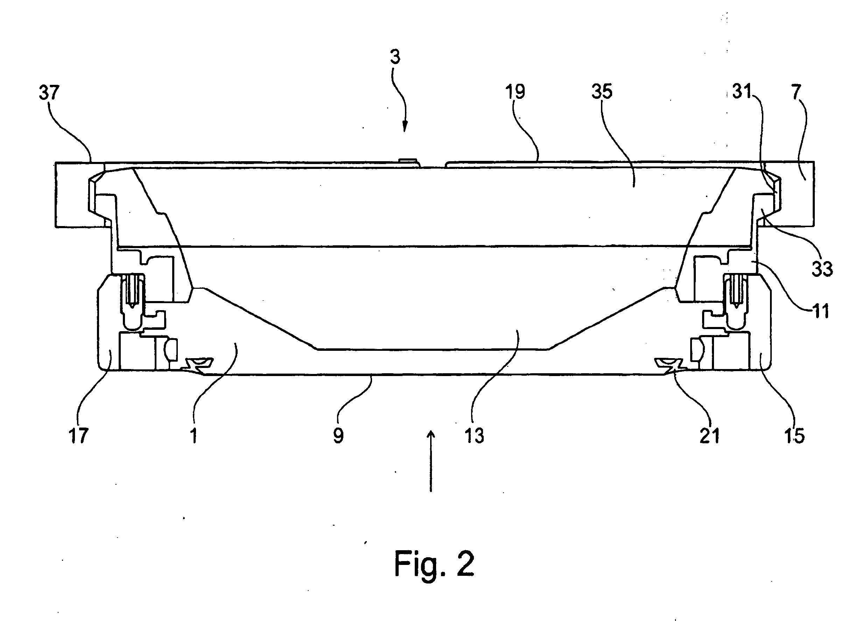

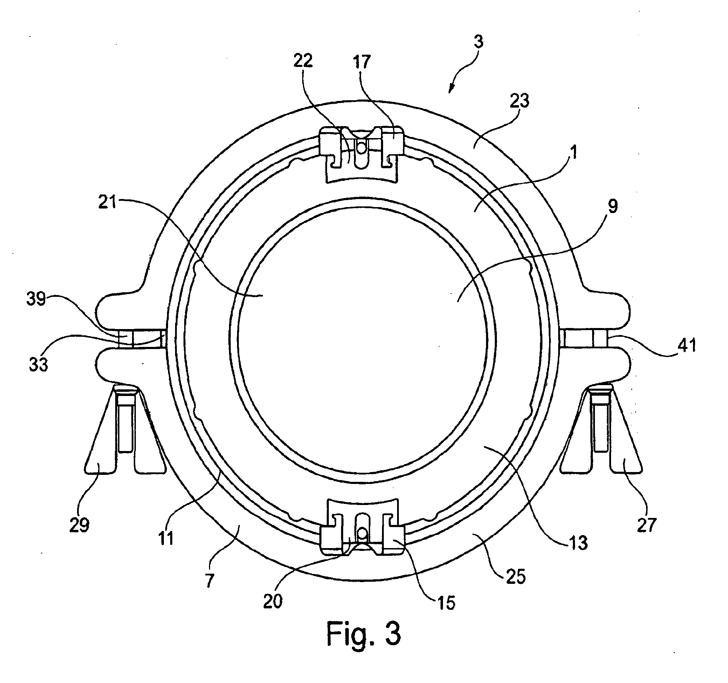

Figur 1 zeigt eine Ausführungsform einer erfindungsgemäßen Befestigungsmoduls 3 in perspektivischer Ansicht. Das Befestigungsmodul 3 verfügt über einen Kupplungsverschluss 1 und eine Verschlussklammer 7. Bei dem dargestellten Kupplungsverschluss 1 handelt es sich in der dargestellten Ausführungsform um ein solchen, wie er z.B. in der EP 1 947 039 A1 beschrieben ist. Der dargestellte Kupplungsverschluss 1 verfügt über eine Schließklappe 9, einen Rohrstutzen 11, eine Rohrstutzendichtung 13, sowie Lagerschalen 15 und 17, in denen Partialwellen bzw. Partialwellenstummel vorliegen (nicht abgebildet in Figur 1; siehe Bezugszeichen 20 und 22 in Figur 3). Dem Kupplungsverschluss 1 hat eine Behälterseite 19 und eine Verschlussseite 21. Die Verschlussseite 21 stellt diejenige Seite dar, welche für ein Ankoppeln bzw. Andocken an die Verschlussseite eines komplementären Kupplungsverschlusses (nicht abgebildet) vorgesehen ist. Bei diesem Vorgang kommen die Stirnseiten der jeweiligen Schließklappen der jeweiligen Kupplungsverschlüsse in geschlossenem Zustand aneinander zur Anlage und können um eine gemeinsame Achse unter Ausbildung einer einheitlichen Schließklappe und unter Freigabe des durch die Rohrstutzen dieser Kupplungsverschlüsse gebildeten Transferkanals gedreht werden. Bei der Verschlussklammer 7 handelt es sich in der dargestellten Ausführungsform um eine so genannte Tri-Clamp-Verbindung, enthaltend zwei Verschlussklammerhälften 23 und 25, welche mit Hilfe von Flügelmuttern 27 und 29 und Gewindebolzen 39 und 41 miteinander verbunden sind. Die dargestellte Tri-Clamp-Verbindung erlaubt eine gleichmäßige Anpressung über den gesamten Umfang. Im Querschnitt betrachtet weist die Verschlussklammer 7, wie Figur 2 entnommen werden kann, eine V-förmige Nut 31 auf. Wie der Figur 2 ferner entnommen werden kann, weist der Rohrstutzen 11 auf der Außenseite seines verschlussseitigen Endes ein umlaufendes erstes Klemmelement in Form eines vorspringenden Klemmrandes 33 auf. In gleicher Weise ist der Klemmstutzen bzw. Flansch 35, der in Verbindung mit einem zu entleerenden bzw. befüllenden Behältnis oder mit einem Fördermittel steht (nicht abgebildet), auf seiner Außenseite mit einem umlaufenden zweiten Klemmelement 37, ebenfalls in Form eines vorspringenden Klemmrandes ausgestattet. Die ersten und zweiten Klemmelement 33 und 37 greifen in die V-förmige Nut 31 der Halbschalen 23 und 25 der Verschlussklammer 7 ein. Auf diese Weise wird der Kupplungsverschluss 1 sicher und reversibel mit der Öffnung eines Behälters oder Fordermittels verbunden.

Zum besseren Verständnis der in den Figuren 1 und 2 dargestellten Ausführungsform eines erfindungsgemäßen Befestigungsmoduls 3 sei auf die in Figur 3 wiedergegebene Draufsicht verwiesen. Figur 3 zeigt die Verschlussklammer 7, die sich aus den Halbschalen 23 und 25 zusammensetzt, sowie den in Eingriff genommenen Kupplungsverschluss 1. Bezogen auf die Figur 2 gibt Figur 3 diejenige Ansicht wieder, die sich beim Blick von unten auf das Befestigungsmodul 3 ergibt (siehe Pfeil in Figur 2). Erkennbar ist ebenfalls das auf der Außenseite des Rohrstutzens 11 vorliegende umlaufende erste Klemmelement 33.

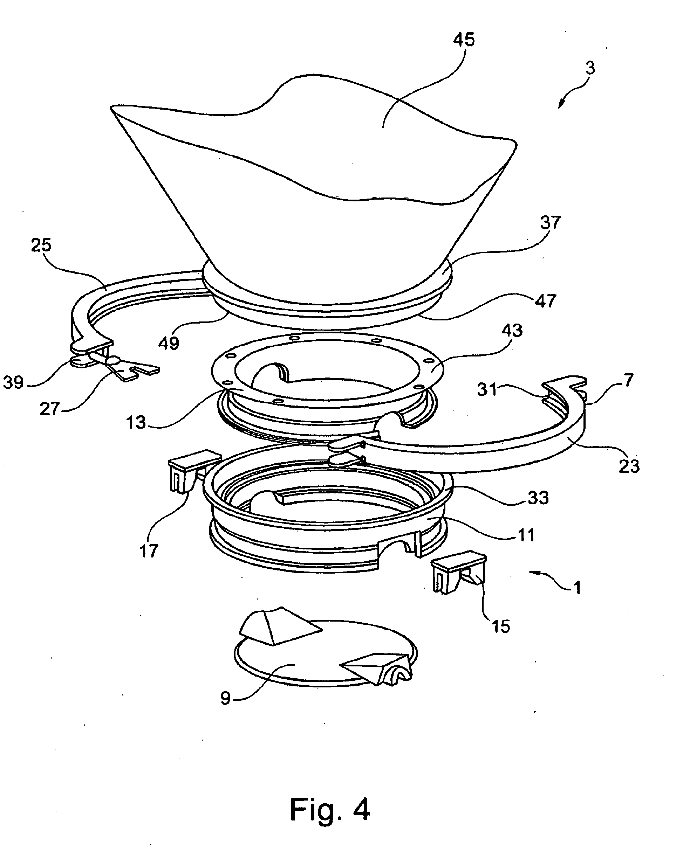

Figur 4 zeigt eine schematische Explosionsdarstellung einer Ausführungsform eines erfindungsgemäßen Befestigungsmoduls 3. Zu erkennen ist, dass der Kupplungsverschluss 1 in der dargestellten Ausführungsform über einen Rohrstutzen 11, eine Schließklappe 9, enthaltend beidseitig Partialwellen, Lagerschalen bzw. Lagerschaleneinheiten 15 und 17 zur Aufnahme der Partialwellen sowie eine Rohrstutzendichtung 13 verfügt. Die Rohrstutzendichtung 13 ist mit einem sich auch horizontal erstreckenden oberen Rand 43 ausgestattet, der über das behälterseitige Ende des Rohrstutzens 11 hinausragt. Der Rohrstutzen 11 selber verfügt an seinem zweiten, behälterseitigen Ende über einen umlaufenden, sich von der Außenseite weg erstreckenden Klemmrand 33. Als weitere Bestandteile des Befestigungsmoduls 3, entnimmt man Figur 4 die Bügel- bzw. Halbschalen 25 und 25 der Verschlussklammer 7. Auch erkennt man die Einwölbung bzw. Nut 31 auf der Innenseite dieser Bügel- bzw. Halbschalen 23 und 25, in die die ersten und zweiten Klemmelemente 33 und 37 bei Verbindung des Kupplungsverschlusses 1 mit dem in Figur 4 ebenfalls (zumindest teilweise) abgebildeten Behälter 45 eingreifen. An der Behälteröffnung 47 ist auf der Außenseite desselben umlaufend das zweite Klemmelement in Form eines hervorstehenden Randes 37 angebracht. Bei der dargestellten Ausführungsform ist dieses zweite Klemmelement 37 Bestandteil eines mit der Öffnung des Behälters verbundenen Flansches 49.

Die Darstellung gemäß Figur 4 gibt eindruckvoll wieder, dass sich das Befestigungsmodul 3 ohne Werkzeuge komplett zerlegen lässt. Insbesondere sind keine Schrauben zu lösen. Auf dieser Weise gelingt eine sehr unkomplizierte, zuverlässige und insbesondere schnelle Montage und Demontage des Befestigungsmoduls, so dass sich insbesondere das Reinigen der erfindungsgemäßen Kupplungsverschlüsse bzw. Befestigungsmodule gegenüber herkömmlichen Systemen wesentlichen einfacher und unproblematischer gestaltet.

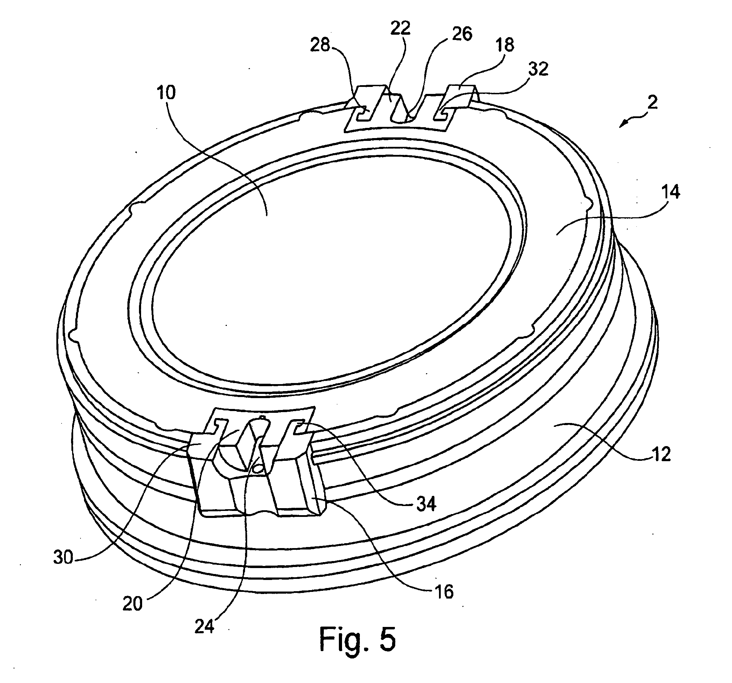

Figur 5 zeigt eine Ausführungsform eines erfindungsgemäßen Kupplungsverschlusses 2. Dieser Kupplungsverschluss 2 verfügt über eine Schließklappe 10, einen Rohrstutzen 12, eine Rohrstutzendichtung 14 sowie Lagerschalen bzw. Lagerschaleneinheiten 16 und 18, in denen Partialwellen bzw. Partialwellenstummel 20 und 22, welche fest, gleichwohl abnehmbar mit der Schließklappe 10 verbunden sind, vorliegen. In der dargestellten Ausführungsform liegen in den Partialwellen 20 und 22 in kollinearer Ausrichtung mit der Drehachse Einkerbungen 24 und 26 vor. Diese Einkerbungen bilden mit korrespondierenden Einkerbungen in den Partialwellen eines zweiten, komplementären Kupplungsverschlusses (nicht abgebildet) Eingriffelemente für Dorne oder Stäbe, welche in diese kombinierten Einkerbungen eingeführt werden können und über die, beispielsweise in Verbindung mit einer Antriebswelle, die aneinander anliegenden Schließklappen zweier zu einer Andockeinrichtung kombinierten Kupplungsverschlüsse von einer Schließstellung in eine Öffnungsstellung unter Freigabe eines aus den beiden Rohrstutzen der Kupplungsverschlüsse gebildeten Transferkanals verschwenkbar sind. Diese Einkerbungen stellen ein optionales Element der Kupplungsverschlüsse dar. Essentiell ist bei dem Kupplungsverschluss gemäß Figur 5 das Vorliegen einer im Wesentlichen halbkreisförmigen Nut 28 bzw. 30 in bzw. benachbart zu den Stirnflächen der Partialwellen 20 und 22. Diese Nuten 28 und 30 umlaufen in der in Figur 5 dargestellten Ausführungsform zumindest teilweise die Auflageflächen der Lager für die Partialwellen 20 und 22. Die gegenüberliegenden Enden der Nut münden in der Auflagefläche der Partialwelle für die Auflagefläche einer Partialwelle eines komplementären Kupplungsverschlusses. In die Nuten 28 und 30 greifen komplementär geformte Federelemente 32 bzw. 34 ein, die jeweils Bestandteil der Lagerschalen 16 bzw. 18 sind und sich demgemäß in Richtung des Inneren des Rohrstutzens 12 erstrecken. Ferner haben bei dem zweiten erfindungsgemäßen Kupplungsverschluss, wie in Figur 5 gezeigt, um eine axiale Relativbewegung von Lager bzw. Lagerschale und Partialwelle auch bei fortwährender Betätigung des Kupplungsverschlusses im Dauerbetrieb vollständig ausschließen zu können, die Nut in der Stirnfläche der Partialwelle sowie die hierzu komplementäre Feder formschlüssig ineinander zu greifen. Dieses kann, wie in Figur 5 gezeigt, dadurch erhalten werden, dass die Nut 28, 30 im Querschnitt sich in Richtung zur Stirnfläche der Partialwelle hin verengt. In entsprechender Weise verbreitet sich die zur Nut 28, 30 komplementäre Feder 32, 34 in Richtung auf das Innere des Rohrstutzens 12 hin. Besonders bevorzugt sind, wie in Figur 5 gezeigt, die zueinander komplementäre Nut und Feder passgenau aufeinander abgestimmt, so dass in axialer Richtung ein bewegungsinvarianter Formschluss gewährleistet ist. Mit dem Kupplungsverschluss gemäß Figur 5 wird sichergestellt, dass, selbst wenn sich eine oder beide Lagerschalen 16, 18 lockern oder lösen sollten, die Schließklappe 10 noch stets nicht aus dem Kupplungsverschluss 2 herausfällt, auch nicht bei der Demontage.

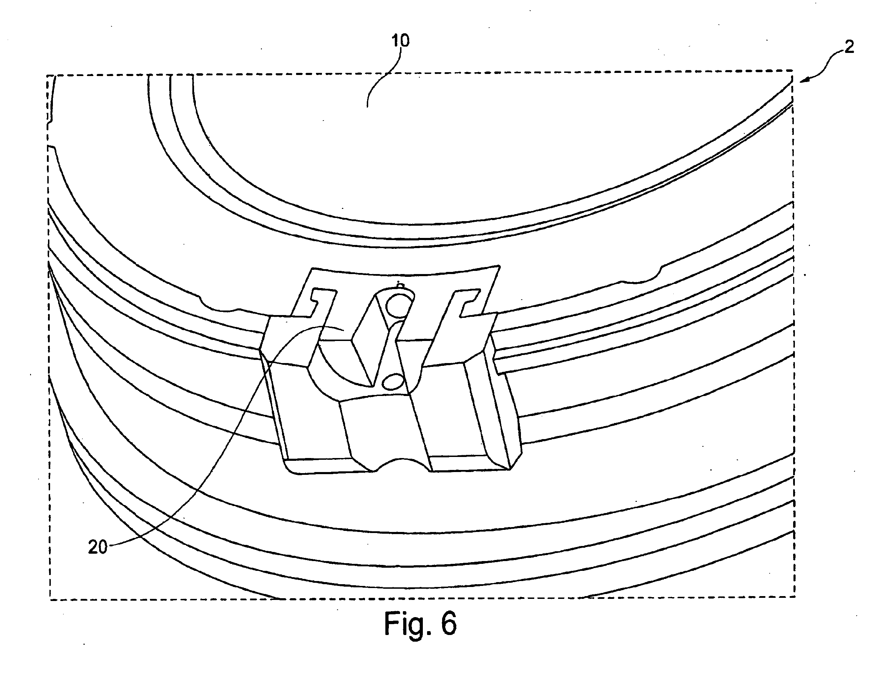

In der Wiedergabe des Ausschnitts von Lagerschale und Partialwelle in Figur 6 wird die Funktionsweise des Kupplungsverschlusses nochmals besonders deutlich. Die Schließklappe 10 mit den Partialwellen 20 und 22 (nicht abgebildet) lässt sich in die Lagerschalen 16 und 18 (nicht abgebildet) auf die Art und Weise einführen, dass man die Schließklappe um 180° gedreht auf die Lagerschalen auflegt, und zwar in einer Weise, dass die zueinander komplementären Nute und Federn gegeneinander zur Anlage kommen. In dem man nun die Schließklappe um ihre Drehachse um 180° dreht, greifen die Federn in die komplementären Nute der Partialwellen ein. Auf entsprechende Art und Weise kann die Schließklappe wieder aus dem Kupplungsverschluss entfernt werden.

Selbstverständlich ist es jedenfalls möglich die Merkmale des Kupplungsverschlusses, wie zu den Figuren 1 bis 4 erörtert, mit den Merkmalen des Kupplungsverschlusses, wie in den Figuren 5 und 6 dargestellt, miteinander zu Kombinieren. Eine solche Ausführungsform findet sich beispielsweise in Figur 3 wiedergegeben.

## Patentansprüche

1. Kupplungsverschluss (1) für eine Andockeinrichtung zum, insbesondere umweltisolierten, Umfüllen, Befüllen oder Entleeren von Behältnissen oder Fördermitteln, mit einer Verschlussseite (21) und einer Behälterseite (19), umfassend einen Rohrstutzen (12) und eine darin verschwenkbar um eine Achse gelagerte Schließklappe (9), enthaltend eine der Verschlussseite (21) in der Schließstellung zugewandte Stirnseite, wobei die Schließklappe (9) an mindestens einer Seite, insbesondere auf beiden Seiten, längs der Achse mit einer Partialwelle oder einem Partialwellenstummel (20, 22) in jeweils zur Verschlussseite hin offenem Lager, insbesondere umfassend eine Lagerschale (16, 19), gelagert ist, wobei die Partialwelle(n) oder -wellenstummel (20, 22) geeignet ist (sind), um bei Anlage mit komplementären Partialwellen bzw.- wellenstummeln eines weiteren, komplementären Kupplungsverschlusses eine Welle oder einen Wellenstummel auszubilden, wobei die Partialwelle oder der Partialwellenstummel (20, 22) mit mindestens einem Eingriffselement (21, 26) ausgestattet ist, in das ein komplementäres Eingriffselement, das in Wirkverbindung mit einem Antrieb bringbar ist oder steht, einführbar ist, und wobei
mindestens eine Partialwelle oder mindestens ein Partialwellenstummel (20, 22) in der Stirnfläche, vorzugsweise beide Partialwellen bzw.- wellenstummel (20, 22), mindestens eine teilkreisförmige, insbesondere halbkreisförmige, Führungsnut (28, 33) aufweist, deren einander gegenüberliegende Enden sich jeweils bis zur Auflagefläche für eine komplementäre Partialwelle bzw. einen komplementären Partialwellenstummel eines weiteren Kupplungsverschlusses erstrecken, und das zur Verschlussseite (21) hin offene Lager (16, 18) mindestens eine in das Innere des Rohrstutzens weisende teilkreisförmige, insbesondere halbkreisförmige, Führungsschiene aufweist, welche im wesentlichen komplementär ist zu der Führungsnut (28, 30) in der Stirnfläche der Partialwelle oder des Partialwellenstummels (20, 22), wobei die Führungsnut und die dazu komplementäre Führungsschiene geeignet und ausgelegt sind, um beim Verschwenken der Schließklappe von der Schließstellung in die Offenstellung formschlüssig ineinanderzugreifen,
und/oder das zur Verschlussseite hin offene Lager (14, 18) mindestens eine in das Innere des Rohrstutzens (12) weisende teilkreisförmige, insbesondere halbkreisförmige,
Führungsnut aufweist, deren einander gegenüberliegende Enden sich jeweils bis zur bzw. in den Bereich der Auflagefläche für eine komplementäre Partialwelle bzw. einen komplementären Partialwellenstummel eines weiteren Kupplungsverschlusses erstrecken,
und dass mindestens eine Partialwelle oder mindestens ein Partialwellenstummel in der Stirnfläche, vorzugsweise beide Partialwellen bzw. -wellenstummel, mindestens eine teilkreiformige, insbesondere halbkreisförmige, Führungsschiene aufweist, welche im wesentlichen komplementär ist zu der Führungsnut in dem Lager, wobei die Führungsnut und die dazu komplementäre Führungsschiene geeignet und ausgelegt sind, um beim Verschwenken der Schließklappe von der Schließstellung in die Offenstellung formschlüssig ineinanderzugreifen, **dadurch gekennzeichnet, dass**
die Führungsnut (28, 30) und die Führungsschiene zueinander komplementäre formschlüssige Ineingriffnahme-Elemente (32, 34) aufweisen, die eine relative Axialbewegung von
Partialwelle bzw. -wellenstummel und Lager unterbinden.

2. Kupplungsverschluss nach Anspruch 1, **dadurch gekennzeichnet, dass** mindestens ein, insbesondere beide zur Verschlussseite (21) offenen Lager (16, 18) Bestandteil von, insbesondere separaten oder separierbaren, Lagerschaleneinheiten (16, 18) sind.

3. Kupplungsverschluss nach Anspruch 2, **dadurch gekennzeichnet, dass** mindestens eine, insbesondere beide Lagerschaleneinheiten (16, 18) reversibel trennbar mit dem Rohrstutzen (12) verbunden oder verbindbar sind.

4. Kupplungsverschluss nach einem der vorangehenden Ansprüche, **dadurch gekennzeichnet, dass** das Eingriffelement auf der Stirnfläche der Partialwelle oder des Partialwellenstummels (20, 22) vorliegt, so dass dieses axial in das komplementäre Eingriffselement, das in Wirkverbindung mit dem Antrieb bringbar ist oder steht, einführbar ist.

5. Kupplungsverschluss nach einem der vorangehenden Ansprüche, **dadurch gekennzeichnet, dass** der Rohrstutzen (12) innenseitig zumindest bereichsweise, insbesondere vollumfänglich, mit einer Rohrstutzendichtung (14) ausgestattet ist.

6. Kupplungsverschluss nach einem der vorangehenden Ansprüche, **dadurch gekennzeichnet, dass** in Schließstellung die Stirnseite der Schließklappe (10) und die nicht in dem Lager (16, 18) gelagerte, insbesondere abgeflachte, Seite der Partialwelle bzw. Partialwellenstummels (20, 22) zumindest bereichsweise fluchtend angeordnet oder angeordnet sind.

7. Kupplungsverschluss nach einem der vorangehenden Ansprüche, **dadurch gekennzeichnet, dass** das komplementäre Eingriffselement mindestens eine Nut (28, 30) und/oder mindestens einen Vorsprung, insbesondere Dorn, umfasst.

8. Kupplungsverschluss nach einem der vorangehenden Ansprüche, **dadurch gekennzeichnet, dass** das Lager (15, 17), insbesondere ein in dem Rohrstutzen vorliegender Lagerschaleneinsatz enthaltend das Lager (20, 22), mindestens bereichsweise, insbesondere vollständig, aus mindestens einem Kunststoftmaterial, insbesondere aus Polyamid, Polyetherketon (PEK), Polyetheretherketon (PEEK), Polyetherimid, Polybutylenterephthalat (PBT), Polyketonen, Polyimiden, Polypheny)enether, Polyaryletherketonen, Polyacrylnitril, Polyvinylchlorid, Polyolefinen und/oder Polyoxymethylen, gefertigt ist.

9. Kupplungsverschluss nach einem der vorangehenden Ansprüche wobei der Rohrstutzen (12) über ein erstes, verschlussseitiges und ein gegenüberliegendes zweites, behälterseitiges Ende sowie eine Innen- und eine Außenseite verfügt und wobei die Schließklappe (10) an dem ersten Ende vorliegt, und wobei ferner auf der Außenseite des Rohrstutzens (12) ein, insbesondere umlaufendes, erstes Klemmelement (33) vorliegt, geeignet und ausgelegt für die kombinierte Ineingriffnahme mit einem zweiten Klemmelement (37) vermittels einer Verschlussklammer (23, 25) zwecks temporärer Verbindung.

10. Kupplungsverschluss nach Anspruch 9, **dadurch gekennzeichnet, dass** das erste Klemmelement (33) auf der Außenseite an dem zweiten Ende des Rohrstutzens (12) vorliegt.

11. Ein Kupplungsverschluss nach einem der vorangehenden Ansprüche, **dadurch gekennzeichnet, dass** die Schließklappe (10) in Wirkverbindung mit mindestens einer Welle der Antriebs steht.

12. Kupplungsverschluss nach Anspruch 5 und vorzugsweise einem der Ansprüche 6 bis 11, **dadurch gekennzeichnet, dass** die Rohrstutzendichtung (14) sich zumindest abschnittsweise über das zweite Ende des Rohrstutzens (12) hinaus erstreckt.

13. Kupplungsverschluss nach einem der vorangehenden Ansprüche, **dadurch gekennzeichnet, dass** die Partialwelle oder der-wellenstummel (20, 22) mit einer Kopffläche in axialer Richtung ausgestattet ist, in bzw. auf der das Eingriffselement vorliegt, das axial in das komplementäre Eingriffselement, das in Wirkverbindung mit dem Antrieb bringbar ist oder steht, einführbar ist.

14. Kupplungsverschluss nach einem der vorangehenden Ansprüche, **dadurch gekennzeichnet, dass** die Schließklappe (10) auf ihrer Außenseite mit mindestens einem Dichtungsabschnitt oder mindestens einer, insbesondere umlaufenden, Dichtung versehen ist, die zumindest abschnittsweise am oder benachbart zum Umfangsrand angeordnet ist.

15. Kupplungsverschluss nach Anspruch 5 und vorzugsweise einem der Ansprüche 6 bis 14, **dadurch gekennzeichnet, dass** die Schließklappe (10) in der Rohrstutzendichtung (14) gelagert ist.

16. Kupplungsverschluss nach einem der vorangehenden Ansprüche, **dadurch gekennzeichnet, dass** die Stirnseite der Schließklappe (10) in der Schließstellung zumindest abschnittsweise mit dem der Verschlussseite (21) zugewandten Rand des Rohrstutzens (12) oder der Rohrstutzendichtung (14) im wesentlichen fluchtend anordbar oder angeordnet ist.

17. Kupplungsverschluss nach Anspruch 9 und vorzugsweise einem der vorangehenden Ansprüche 10 bis 16, **dadurch gekennzeichnet, dass** das erste Klemmelement (33) einen von der Außenseite vorspringenden Klemmrand, insbesondere eine, vorzugsweise umlaufende, Feder, darstellt.

18. Andockeinrichtung zum, insbesondere umweltisolierten, Umfüllen, Befüllen, und/oder Entleeren von Behältnissen oder Fördermitteln, umfassend über ihre jeweiligen Verschlussseiten (21) aneinander bündig anlegbare oder anliegende erste und zweite komplementäre Kupplungsverschlüsse (1), wobei die Stirnseiten der jeweiligen Schließklappen (10) aneinander anliegen oder aneinander zur Anlage bringbar sind und in aneinander angelegtem Zustand aus einer Schließstellung, in der sie den durch den Rohrstutzen (12) des ersten Kupplungsverschlusses (1) und den Rohrstutzens (12) des zweiten Kupplungsverschlusses (12) gebildeten Transferkanal verschließen, um eine gemeinsame Achse in eine Öffnungsstellung schwenkbar sind, **dadurch gekennzeichnet, dass** mindestens ein Kupplungsverschluss (1), insbesondere beide Kupplungsverschlüsse (1), einen Kupplungsverschluss (1) gemäß einem der vorangehenden Ansprüche umfassen oder darstellen.

19. Andockeinrichtung nach Anspruch 18, **dadurch gekennzeichnet, dass** die Rohrstutzen, insbesondere die Rohrstutzendichtungen (14), von erstem und zweitem Kupplungsverschluss (1) bei Anlage derselben gegeneinander bündig abschließen.

20. Andockeinrichtung nach Anspruch 18 oder 19, **dadurch gekennzeichnet, dass** die Schließklappen (10) von erstem und zweitem Kupplungsverschluss (1) im Wesentlichen kreisförmig ausgebildet sind.

## Claims

1. A coupling closure (1) for a docking device for transferring the contents of, filling or emptying containers or conveyances, in particular in a manner isolated from the environment, including a closure side (21) and a container side (19), comprising a piece of pipe (12) and a closing flap (9) supported therein so that it can be turned about an axis, containing a front side facing the closure side (21) in the closed position, wherein said closing flap (9) is supported in a bearing that is open towards the closure side and in particular comprises a bearing shell (15, 17) by means of a partial shaft or a partial shaft stub (20, 22) alongside said axis on at least one side, in particular on both sides, wherein said partial shaft(s) or partial shaft stub(s) (20, 22) is/are suitable for forming a shaft or a shaft stub when they lie against complementary partial shafts or partial shaft stubs of another, complementary coupling closure, wherein
the partial shaft or partial shaft stub (20, 22) is provided with at least one engaging element (21, 26) into which a complementary engaging element, which can be or is operatively connected to a drive, can be inserted, and wherein
at least one partial shaft or at least one partial shaft stub (20, 22), preferably both partial shafts or partial shaft stubs (20, 22), comprise(s) at least one guiding groove (28, 30) in the front side, which groove has the shape of a circular arc, in particular a semicircle, and opposite ends that extend through to the contact surface for a complementary partial shaft or a complementary partial shaft stub of another coupling closure, and the bearing (16, 18) that is open towards the closure side (21) comprises at least one guide rail which extends into the inside of the piece of pipe and has the shape of a circular arc, in particular a semicircle, and is substantially complementary to the guiding groove (28, 30) in the front side of the partial shaft or partial shaft stub (20, 22), wherein said guiding groove and said complementary guide rail are suitable for interlocking and designed to interlock with each other when the closing flap is turned from the closed position to the open position,
and/or the bearing (16, 18) that is open towards the closure side comprises at least one guiding groove which extends into the inside of the piece of pipe (12) and has the shape of a circular arc, in particular a semicircle, and whose opposite ends extend through to or to near the contact surface for a complementary partial shaft or a complementary partial shaft stub of another coupling closure, and at least one partial shaft or at least one partial shaft stub, preferably both partial shafts or partial shaft stubs, comprise(s) at least one guide rail on the front side, which guide rail has the shape of a circular arc, in particular a semicircle, and is substantially complementary to the guiding groove in the bearing, wherein said guiding groove and said complementary guide rail are suitable for interlocking and designed to interlock with each other when the closing flap is turned from the closed position to the open position, **characterized in that**
the guiding groove (28, 30) and the guide rail comprise connecting elements (32, 34) which are complementary to and interlock with each other, thus preventing any relative axial movement of the partial shaft or partial shaft stub and the bearing.

2. The coupling closure according to claim 1, **characterized in that** at least one, preferably both, bearing(s) (16, 18) that is/are open towards the closure side (21)is/ are part of bearing shell units (16, 18), in particular bearing shell units that are separate or can be separated.

3. The coupling closure according to claim 2, **characterized in that** at least one, preferably both, bearing shell unit(s) (16, 18) is/are or can be connected to the piece of pipe (12) in a reversible manner allowing for disconnection.

4. The coupling closure according to any one of the preceding claims, **characterized in that** the engaging element is provided on the front side of the partial shaft or partial shaft stub (20, 22), so that it can be axially inserted into the complementary engaging element that can be or is operatively connected to the drive.

5. The coupling closure according to any one of the preceding claims, **characterized in that** the piece of pipe (12) is provided with a pipe seal (14) on the inside at least in sections, in particular throughout its circumference.

6. The coupling closure according to any one of the preceding claims, **characterized in that**, in the closed position, the front side of the closing flap (9) and the side of the partial shaft or partial shaft stub (20, 22) which is not supported in the bearing (16, 18) and is in particular flattened can be or are arranged so as to be flush with each other at least in sections.

7. The coupling closure according to any one of the preceding claims, **characterized in that** the complementary engaging element comprises at least one groove (28, 30) and/or at least one projection, in particular a pin.

8. The coupling closure according to any one of the preceding claims, **characterized in that** the bearing (16, 18), in particular a bearing shell insert which contains the bearing (16, 18) and is provided in the piece of pipe, is made of at least one plastic material, in particular polyamide, polyetherketone (PEK), polyetheretherketone (PEEK), polyetherimide, polybutyleneterephthalate (PBT), polyketones, polyimides, polyphenyleneether, polyaryletherketones, polyacrylnitrile, polyvinylchloride, polyolefins and/or polyoxymethylene, at least in sections, in particular in their entirety.

9. The coupling closure according to any one of the preceding claims, wherein the piece of pipe (12) is provided with a first, closure side end and an opposite second, container side end as well as an inner side and an outer side, and wherein the closing flap (9) is provided at the first end, and wherein in addition a first clamping element (33), in particular a circumferential clamping element, is provided on the outer side of the piece of pipe (12), which clamping element is suitable for being engaged and designed to be engaged, together with a second clamping element (37) in a combined manner, by a closure clamp (23, 25) in order to achieve a temporary connection.

10. The coupling closure according to claim 9, **characterized in that** the first clamping element (33) is provided on the outer side, at the second end of the piece of pipe (12).

11. The coupling closure according to any one of the preceding claims, **characterized in that** the closing flap (9) is operatively connected to at least one shaft of the drive.

12. The coupling closure according to claim 5 and preferably any one of claims 6 to 11, **characterized in that** the pipe seal (14) extends beyond the second end of the piece of pipe (12) at least in sections.

13. The coupling closure according to any one of the preceding claims, **characterized in that** the partial shaft or partial shaft stub (20, 22) is provided with a leading surface in the axial direction, in or on which the engaging element is provided that can be axially inserted into the complementary engaging element which can be or is operatively connected to the drive.

14. The coupling closure according to any one of the preceding claims, **characterized in that** the closing flap (9) is provided with at least one seal portion or at least one seal, in particular a circumferential seal, on its outer side, which seal is arranged on or adjacent to the circumferential edge at least in sections.

15. The coupling closure according to claim 5 and preferably any one of claims 6 to 14, **characterized in that** the closing flap (9) is supported in the pipe seal (14).

16. The coupling closure according to any one of the preceding claims, **characterized in that**, in the closed position, the front side of the closing flap (9) can be or is arranged so as to be substantially flush with the edge of the piece of pipe (12) or of the pipe seal (14) facing the closure side (21), at least in sections.

17. The coupling closure according to claim 9 and preferably any one of the preceding claims 10 to 16, **characterized in that** the first clamping element (33) is a clamping edge projecting from the outer side, in particular a spring, preferably a circumferential spring.

18. A docking device for transferring the contents of, filling and/or emptying containers or conveyances, in particular in a manner isolated from the environment, comprising first and second complementary coupling closures (1) whose closure sides (21) lie or can be made to lie flush against each other, wherein the front sides of the closure flaps (9) lie or can be made to lie against each other and, when they lie against each other, can be turned about a shared axis from a closed position, in which they close the transfer channel formed by the piece of pipe (12) of the first coupling closure (1) and the piece of pipe (12) of the second coupling closure, to an open position, **characterized in that** at least one coupling closure (1), in particular both coupling closures (1), comprise(s) or is/are a coupling closure (1) according to any one of the preceding claims.

19. The docking device according to claim 18, **characterized in that** the pieces of pipe, in particular the pipe seals (14), of the first and the second coupling closure (1) are flush with each other when they lie against each other.

20. The docking device according to claim 18 or 19, **characterized in that** the closing flaps (9) of the first and the second coupling closure (1) are substantially circular.

## Revendications

1. Fermeture à accouplement (1) pour un dispositif d'accrochage pour le transvasement, le remplissage ou le vidage de récipients ou de moyens de transport, en particulier de façon isolée par rapport à l'environnement, avec un côté fermeture (21) et un coté conteneur (19), comprenant une tubulure (12) et un clapet de fermeture (9) qui y est supporté intérieurement en pivotement autour d'un axe, contenant un côté frontal tourné vers le côté fermeture (21) dans la position de fermeture, le clapet de fermeture (9) étant supporté sur au moins un côté, en particulier sur les deux côtés, le long de l'axe avec un arbre partiel ou un bout d'arbre partiel (20, 22) dans un palier respectivement ouvert vers le côté fermeture, comprenant en particulier un coussinet de palier (16, 19), le/les arbres partiel(s) ou bout(s) d'arbre partiel(s) (20, 22) étant approprié(s) pour, lors de l'appui avec des arbres partiels ou bouts d'arbre partiels complémentaires d'une autre fermeture à accouplement complémentaire, constituer un arbre ou un bout d'arbre, l'arbre partiel ou le bout d'arbre partiel (20, 22) étant équipé d'au moins un élément d'engagement (21, 26) dans lequel peut être introduit un élément d'engagement complémentaire qui peut être amené, ou qui est, en liaison opératoire avec un entraînement, et au moins un arbre partiel ou au moins un bout d'arbre partiel (20, 22) dans la face frontale, de préférence les deux arbres partiels ou respectivement bouts d'arbre partiels (20, 22), présentant au moins une rainure de guidage (28, 33) en forme de cercle de partiel, en particulier en forme de demi-cercle, dont les extrémités réciproquement opposées s'étendent respectivement jusqu'à la face de support pour un arbre partiel complémentaire ou respectivement un bout d'arbre partiel complémentaire d'une autre fermeture à accouplement, et le palier (16, 18) ouvert vers le côté fermeture (21) présentant au moins un rail de guidage en forme de cercle de partiel, en particulier en forme de demi-cercle, dirigé vers l'intérieur de la tubulure, rail qui est essentiellement complémentaire à la rainure de guidage (28, 30) dans la face frontale de l'arbre partiel ou du bout d'arbre partiel (20, 22), la rainure de guidage et le rail de guidage qui lui est complémentaire étant appropriés et conçus pour, lors du pivotement du clapet de fermeture depuis la position de fermeture vers la position d'ouverture, s'emboîter l'un dans l'autre par liaison de forme, et/ou le palier (14, 18) ouvert vers le côté fermeture présentant au moins une rainure de guidage en forme de cercle de partiel, en particulier en forme de demi-cercle, dirigée vers l'intérieur de la tubulure (12), rainure dont les extrémités réciproquement opposées s'étendent respectivement jusqu'à la face de support ou respectivement jusque dans la zone de la face de support pour un arbre partiel complémentaire ou respectivement un bout d'arbre partiel complémentaire d'une autre fermeture à accouplement et, dans la face frontale, au moins un arbre partiel ou au moins un bout d'arbre partiel, de préférence les deux arbres partiels ou respectivement les deux bouts d'arbre partiels, présentant au moins un rail de guidage en forme de cercle de partiel, en particulier en forme de demi-cercle, qui est essentiellement complémentaire à la rainure de guidage dans le palier, la rainure de guidage et le rail de guidage qui lui est complémentaire étant appropriés et conçus pour, lors du pivotement du clapet de fermeture depuis la position de fermeture vers la position d'ouverture, s'emboîter l'un dans l'autre par liaison de forme, **caractérisé en ce que**
la rainure de guidage (28, 30) et le rail de guidage présentent des éléments d'emboîtement (32, 34) par liaison de forme réciproquement complémentaires qui empêchent un mouvement axial relatif de l'arbre partiel ou respectivement du bout d'arbre partiel et du palier.

2. Fermeture à accouplement selon la revendication 1, **caractérisée en ce qu'**au moins un palier (16, 18), en particulier deux paliers (16, 18) ouverts vers le côté fermeture (21), font partie intégrante d'unités de coussinets de palier (16, 18), en particulier séparées ou séparables.

3. Fermeture à accouplement selon la revendication 2, **caractérisée en ce qu'**au moins une, en particulier deux unités de coussinets de palier (16, 18), sont raccordées ou peuvent être raccordées, de façon réversiblement séparable, à la tubulure (12).

4. Fermeture à accouplement selon une des revendications précédentes, **caractérisée en ce que** l'élément d'engagement est situé sur la face frontale de l'arbre partiel ou du bout d'arbre partiel (20, 22) de telle sorte que cet élément peut être introduit axialement dans l'élément d'engagement complémentaire qui peut être amené, ou qui est, en liaison opératoire avec l'entraînement.

5. Fermeture à accouplement selon une des revendications précédentes, **caractérisée en ce que** la tubulure (12) est équipée au moins par segments sur le côté intérieur d'un joint d'étanchéité de tubulure (14), en particulier sur toute la circonférence.

6. Fermeture à accouplement selon une des revendications précédentes, **caractérisée en ce que**, dans la position de fermeture, le côté frontal du clapet de fermeture (10) et le côté, en particulier aplati, de l'arbre partiel ou respectivement du bout d'arbre partiel (20, 22) qui n'est pas supporté dans le palier (16, 18) sont disposés ou peuvent être disposés en affleurement au moins par segments.

7. Fermeture à accouplement selon une des revendications précédentes, **caractérisée en ce que** l'élément d'engagement complémentaire comprend au moins une rainure (28, 30) et/ou au moins une saillie, en particulier une broche.

8. Fermeture à accouplement selon une des revendications précédentes, **caractérisée en ce que** le palier (15, 17), en particulier un insert de coussinets de palier situé dans la tubulure et contenant le palier (20, 22), est réalisé au moins par segments, en particulier complètement, à partir d'au moins une matière plastique, en particulier polyamide, polyéthercétone (PEK), polyétheréthercétone (PEEK), polyétherimide, polybutylène téréphtalate (PBT), polycétones, polyimides, polyphénylène éther, polyaryléthercétones, polyacrylonitrile, polychlorure de vinyle, polyoléfines et/ou polyoxyméthylène.

9. Fermeture à accouplement selon une des revendications précédentes, la tubulure (12) disposant d'une première extrémité, côté fermeture, et d'une deuxième extrémité opposée, côté conteneur, ainsi que d'un côté intérieur et d'un côté extérieur, et le clapet de fermeture (10) étant situé sur la première extrémité, et un premier élément de serrage (33), en particulier un élément de serrage périphérique, étant en outre situé sur le côté extérieur de la tubulure (12), cet élément étant approprié et conçu pour l'emboîtement combiné avec un deuxième élément de serrage (37) au moyen d'une pince de fermeture (23, 25) en vue d'un raccordement temporaire.

10. Fermeture à accouplement selon la revendication 9, **caractérisée en ce que** le premier élément de serrage (33) est situé sur le côté extérieur à la deuxième extrémité de la tubulure (12).

11. Fermeture à accouplement selon une des revendications précédentes, **caractérisée en ce que** le clapet de fermeture (10) est en liaison opératoire avec au moins un arbre de l'entraînement.

12. Fermeture à accouplement selon la revendication 5 et de préférence selon une des revendications 6 à 11, **caractérisée en ce que** le joint d'étanchéité de tubulure (14) s'étend au moins par segments au-delà de la deuxième extrémité de la tubulure (12).

13. Fermeture à accouplement selon une des revendications précédentes, **caractérisée en ce que** l'arbre partiel ou le bout d'arbre partiel (20, 22) est équipé d'une face de tête dans la direction axiale, dans laquelle ou respectivement sur laquelle est situé l'élément d'engagement qui peut être introduit dans l'élément d'engagement complémentaire qui peut être amené ou qui est en liaison opératoire avec l'entraînement.

14. Fermeture à accouplement selon une des revendications précédentes, **caractérisée en ce que** le clapet de fermeture (10) est, sur son côté extérieur, muni d'au moins un segment de joint d'étanchéité ou d'au moins un joint d'étanchéité, en particulier périphérique qui est disposé au moins par segments sur ou au voisinage du bord circonférentiel.

15. Fermeture à accouplement selon la revendication 5 et de préférence selon une des revendications 6 à 14, **caractérisée en ce que** le clapet de fermeture (10) est supporté dans le joint d'étanchéité de tubulure (14).

16. Fermeture à accouplement selon une des revendications précédentes, **caractérisée en ce que** le côté frontal du clapet de fermeture (10), dans la position de fermeture, peut être disposé ou est disposé essentiellement en affleurement au moins par segments avec le bord de la tubulure (12) tourné vers le côté fermeture (21) ou du joint d'étanchéité de tubulure (14).

17. Fermeture à accouplement selon la revendication 9 et de préférence selon une des revendications précédentes 10 à 16, **caractérisée en ce que** le premier élément de serrage (33) représente un bord de serrage qui dépasse du côté extérieur, en particulier un ressort, de préférence périphérique.

18. Dispositif d'accrochage pour le transvasement, le remplissage et/ou le vidage de récipients ou de moyens de transport, en particulier de façon isolée par rapport à l'environnement, comprenant, sur ses côtés fermeture (21) respectifs, des première et deuxième fermetures à accouplement (1) complémentaires qui peuvent être placées ou qui sont placées en affleurement réciproque, les côtés frontaux des clapets de fermeture (10) respectifs étant juxtaposés ou pouvant être amenés en juxtaposition et, dans un état juxtaposé, peuvent pivoter vers une position d'ouverture autour d'un axe commun à partir d'une position de fermeture dans laquelle ils ferment le canal de transfert formé par la tubulure (12) de la première fermeture à accouplement (1) et la tubulure (12) de la deuxième fermeture à accouplement (12), **caractérisé en ce qu'**au moins une fermeture à accouplement (1), en particulier les deux fermetures à accouplement (1), comprennent ou représentent une fermeture à accouplement (1) selon une des revendications précédentes.

19. Dispositif d'accrochage selon la revendication 18, **caractérisé en ce que** les tubulures, en particulier les joints d'étanchéité de tubulure (14), de la première et de la deuxième fermeture à accouplement (1) se ferment en affleurement réciproque lors de l'appui de celles-ci.

20. Dispositif d'accrochage selon la revendication 18 ou 19, **caractérisé en ce que** les clapets de fermeture (10) de la première et de la deuxième fermeture à accouplement (1) sont constitués de façon essentiellement circulaire.
